# EUROPEAN PATENT SPECIFICATION

(11) **EP 3 093 578 B1**
(45) Date of publication and mention of the grant of the patent: **26.12.2018**
(21) Application number: 16161966.3
(22) Date of filing: 23.03.2016
(51) Int. Cl.: F24H 3/04

(54) **PORTABLE FLUID FUEL AIR HEATER**
TRAGBARER FLÜSSIGBRENNSTOFF-LUFTERHITZER
RECONDUCTEUR D'AIR COMBUSTIBLE FLUIDE PORTABLE

(30) Priority: 14.05.2015 IT MI20150685
(43) Date of publication of application: 16.11.2016
(73) Proprietor: DANTHERM S.P.A., 37010 Pastrengo (VR) (IT)
(72) Inventor: GIARETTA, Enzo, I-37010 Pastrengo, VERONA (IT); VERANI, Stefano, I-37010 Pastrengo, VERONA (IT)
(74) Representative: Leihkauf, Steffen Falk

(56) References cited:
- EP-A1- 2 784 409
- WO-A1-98/22750
- US-A1- 2006 016 091
- US-A1- 2015 050 607
- US-B2- 8 068 724

## Description

### Field of the invention

The present invention relates to a fuel air heater, e.g. a fluid fuel heater, of the portable type, i.e. configured to be easily moved and transported by a person in order to place it in an operative location, and more specifically to a portable fuel air heater having an electric battery on board from which it arises an amount of electrical energy for powering electrical devices required for the operation of the heater, for example an electric fan for generating a forced combustion air flow in the combustion chamber.

### Background art

Portable heaters for heating the air of an environment are known, which portable heaters use the combustion of a fuel, e.g. a fluid fuel.

In order to perform the combustion, they generally use a forced combustion air flow which, together with the fuel, causes the combustion in the combustion chamber.

The forced combustion air flow is sometimes generated by an electric fan mounted on board the heater and upstream of the combustion chamber, and such a fan is to be activated for the whole duration of the combustion.

The need to make the operation of the heater independent from the electrical energy distribution network has led to some attempts to use an electric battery or thermoelectric cells mounted on board the heater.

Since the electric battery mounted on board must electrically power the fan for the whole duration of the operation, it needs to have a very high energy capacity to avoid such a battery from quickly discharging and the duration of the operation from being excessively short.

However, high capacity electric batteries are often cumbersome and heavy, thereby countering the need to make the heater as lightweight and compact as possible.

Some attempts to solve this problem have been made by mounting a rechargeable electric battery and a battery recharging device inside the heater.

Thereby, a battery with smaller dimensions may be used, but the heater needs to be repeatedly connected to the power distribution network each time the battery mounted on board is discharged and needs to be recharged. If no distribution network electric socket is available close to an operative position of the heater, the operation thereof needs to be interrupted each time, the heater needs to be transported to an electric socket and connected to such an socket for the time required to be charged.

In the meantime, there would be no other alternative for heating the operative position other than using another charged heater, with the subsequent need to arrange a plurality of heaters to be alternated with one another and to transport them between a recharging station and an operative position.

Therefore, these known heaters have the disadvantage of not allowing a continuous, prolonged operation, other than for the duration of the battery operation time of the rechargeable battery mounted on board, which battery powers the electrical devices required for the operation of the heater which are mounted on board, for example a fan for supplying combustion air to the combustion chamber.

US 8,068,724 provides a support fastened to an upper surface of a tank, having an adjustable panel which can be fastened to the support to allow access to an inner chamber defined by the support. The inner chamber is adapted to contain components of the heater therein, such as an energy source, a control and ignition circuitry, cables, tubes, etc.

This device has various disadvantages, including the fact that in order to replace an internal component, e.g. the battery, the fastening means of the adjustable panel must be acted on, the panel removed or moved, the inside of the inner chamber accessed, the battery identified among the other components, the battery electrically disconnected, released and removed.

All these operations make replacing the battery rather complicated and laborious, in addition to requiring specific technical skills to avoid damaging the other components contained inside the inner chamber and to prevent an operator from involuntarily coming into contact with internal components of the heater.

Therefore, the replacement of the battery in such a device does not occur in order to replace a discharged battery with a charged one, but to replace a battery which no longer works with a new one, i.e. the intervention allowed on such a heater is an occasional technical maintenance operation by a specialized technician at a specific service center, not the ordinary and quick replacement of a discharged battery with a charged battery by a normal user in any location, even a dusty and humid one such as a worksite.

Another disadvantage of this known device is that the impermeability of the inner chamber which contains the battery and the electronic circuitry may only be ensured when the adjustable panel hermetically closes the inner chamber of the support. However, such a panel needs to be removed to access the inside of the inner chamber in order to replace the battery, therefore such a known device does not allow the replacement of the battery at a worksite.

US 2015/0050607 describes a portable gas-fired heater comprising a housing, a burner assembly, and a carbon dioxide detector system. In one aspect a rechargeable power source may be disposed within an accommodating slot within a side panel of the housing.

US 2006/0016091 describes a gas hot air gun comprising a main body, an air blower, an ignition device, a nozzle and a switch set. The main body further comprises a barrel, a handle, a heating chamber and a mixing chamber on the inner front of the barrel, and a battery set and a gas can inside the handle. The handle comprises a first container and a second container inside the handle, a battery set and a gas can inside the first and the second container respectively, the gas can contains burnable fluid, usually is liquid gas; a movable cover is on the bottom of the handle to cover the first and the second container.

Therefore, there is a need to provide a portable fuel air heater having an electric battery which can be easily and quickly replaced, even by an unskilled person, and even under dusty and unfavorable environmental conditions, such as e.g. at a worksite.

### Summary of the invention

It is the object of the present invention to devise and provide a portable fuel air heater which allows the aforesaid needs to be met while at least partially obviating the drawbacks indicated above with reference to the known art.

In particular, it is a task of the present invention to provide a fuel air heater which allows a quick and simple replacement of a battery also by unskilled users, thus avoiding the need to resort to a service center.

It is therefore the object of the present invention to provide a portable fuel air heater which allows the battery to be easily and quickly replaced while avoiding the need to open a containment compartment adapted to contain the battery.

It is also an object of the present invention to provide a portable fuel air heater which allows a quick replacement of the battery while avoiding an inner compartment comprising other electric or electronic heater components from being accessed.

It is also an object of the present invention to provide a portable fuel air heater which allows the battery to be replaced while avoiding the accidental contact with other components arranged inside the heater.

It is another object of the present invention to protect the inside of the heater from involuntary introduction of dust or liquids or foreign bodies or tools, and also from the contact by a user during the replacement of the battery.

These and further objects and advantages are achieved by means of a portable fuel air heater in accordance with the appended claims, the definitions of which form an integral part of the present description.

Due to the simple and quick replacement of the battery while avoiding an inner chamber from being opened by removing a closure panel, the battery may be replaced on site, even at a worksite, without the need to transport the heater close to an electric socket for recharging the battery mounted therein.

It will therefore be sufficient to recharge a plurality of batteries outside and independently of the heater, close to a power distribution network, while leaving the heater at the worksite, and to transport the batteries alone to the heater at the worksite to apply one or more of them at a time on the heater until they have a sufficient charge amount for the operation thereof.

Therefore, when each battery applied on the heater is discharged, it can be easily and quickly replaced by a charged battery, without removing the heater from its working position.

Thereby, the heater will be capable of operating for a total duration equal to the sum of the duration of the operation of each charged battery.

### Brief description of the drawings

Further features and advantages of the present invention will become apparent from the following description of preferred embodiments thereof, given only by way of a non-limiting, indicative example, with reference to the accompanying drawings, in which:

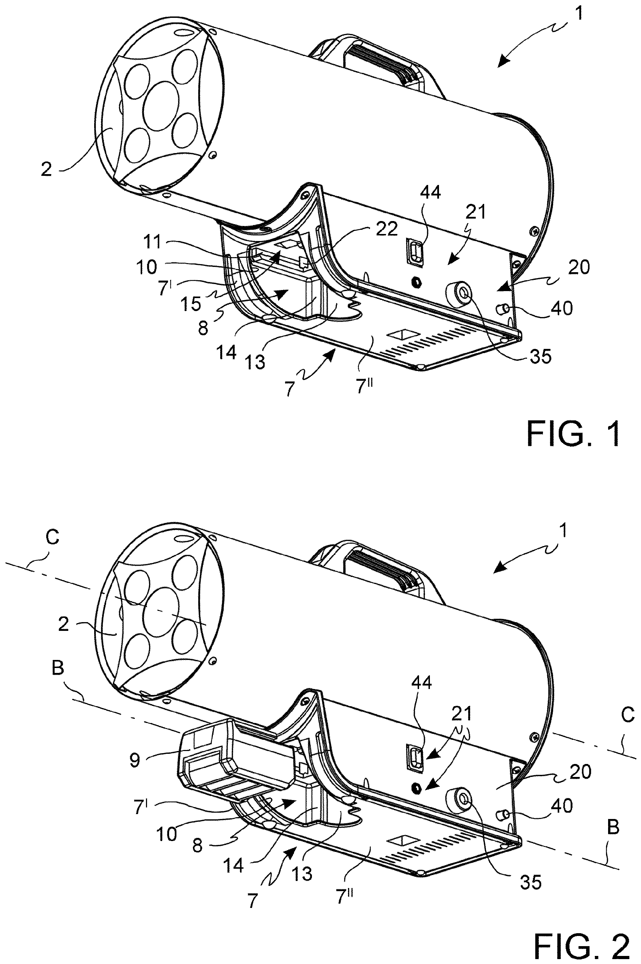

- figure 1 shows a bottom perspective view of a heater according to the invention, in which the battery is removed;
- figure 2 shows the perspective view in figure 1, in which the battery is depicted in a battery inlet position;

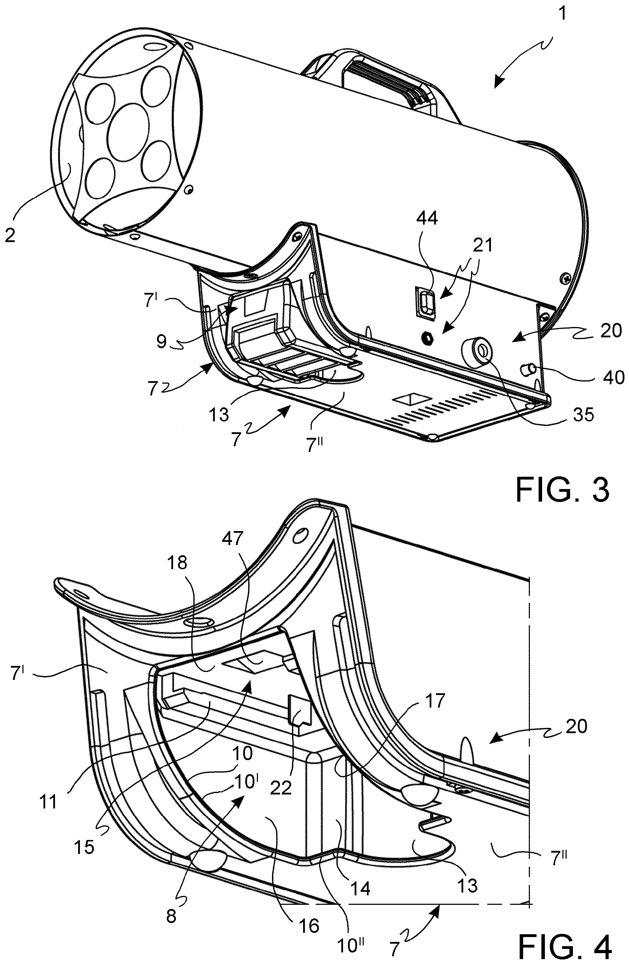

- figure 3 shows the perspective view in figure 1, in which the battery is depicted in an operative position of the battery;
- figure 4 shows an enlarged view of a cavity-like portion for a battery of the heater in figure 1;

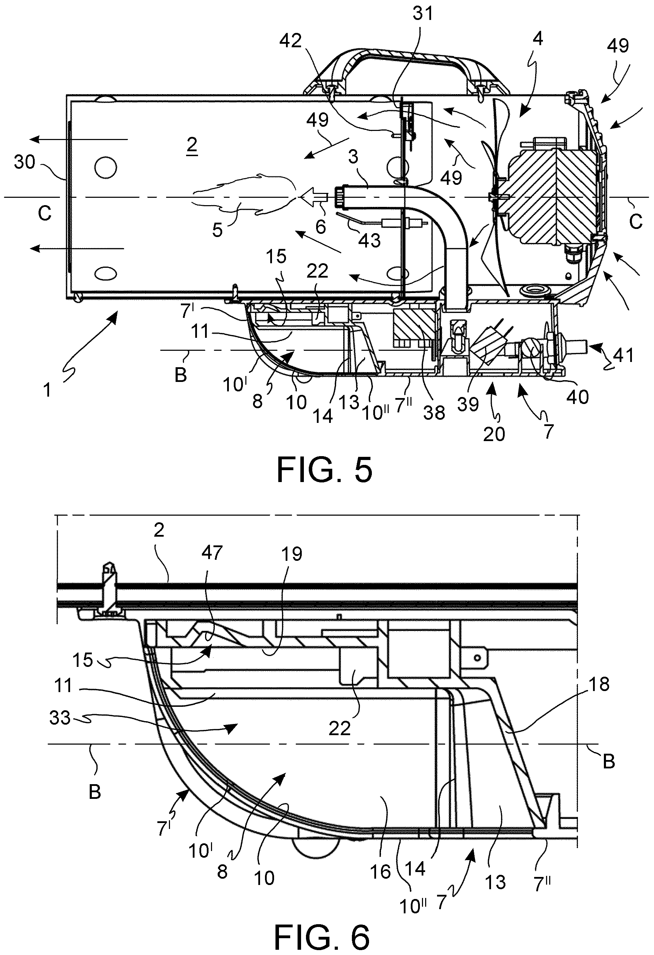

- figure 5 shows a longitudinal sectional view passing through a main axis of the combustion chamber;
- figure 6 shows an enlarged detail of figure 5, comprising the cavity-like portion for the battery;

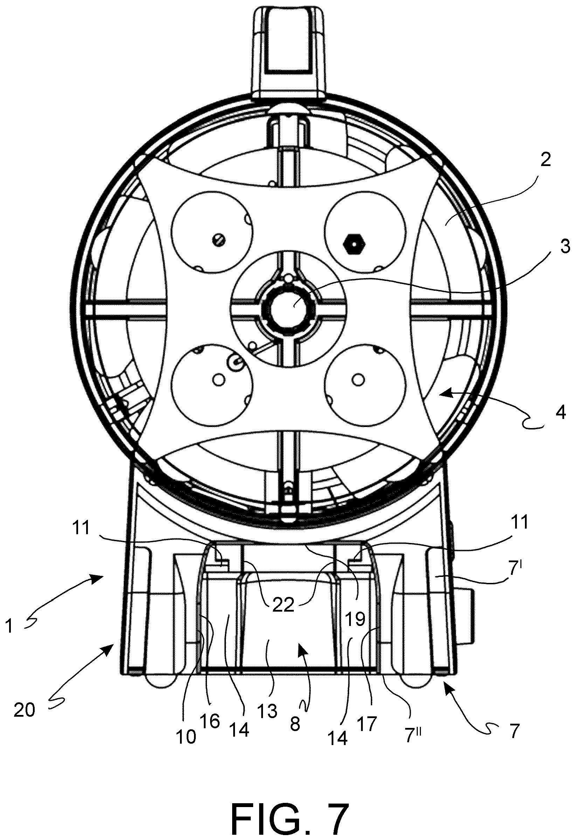

- Figure 7 shows a front view of a heater according to the invention;

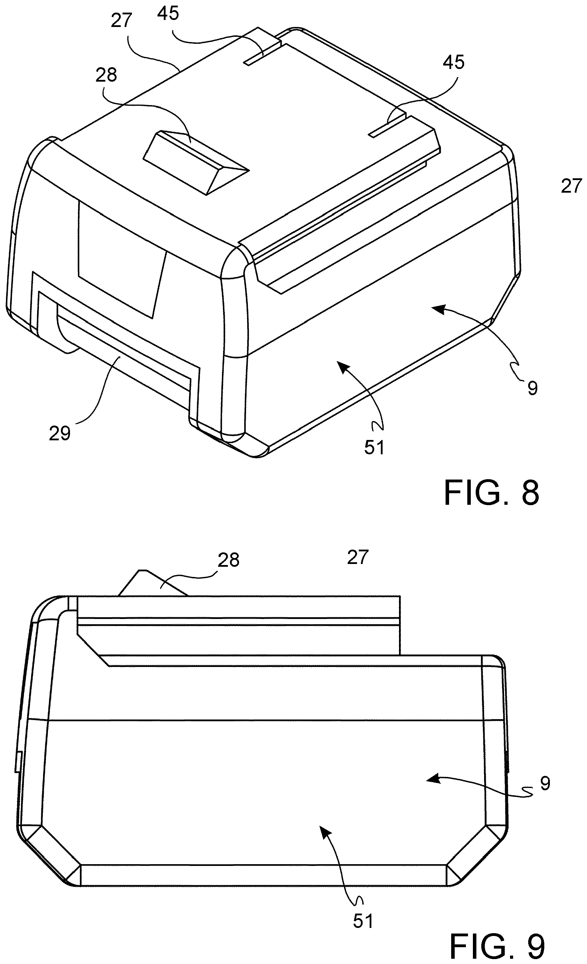

- figure 8 shows a perspective view of an example of removable battery which may be used in the heater in figure 1;

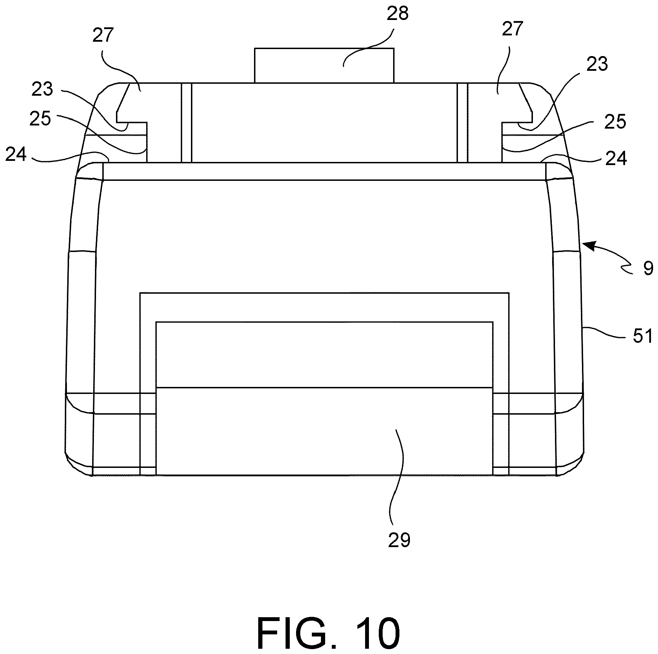

- figures 9 and 10 show a side view and a front view, respectively, of the battery in figure 8;

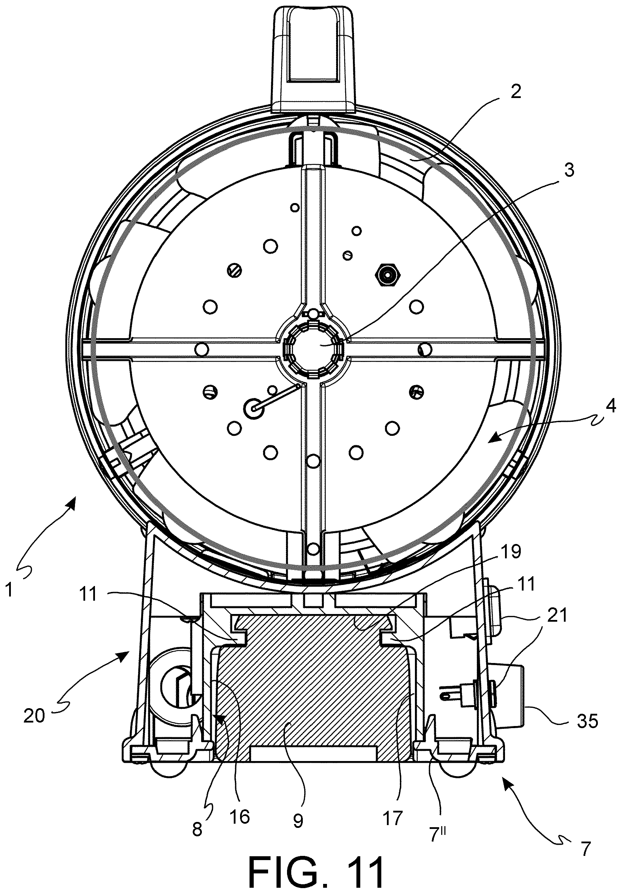

- figure 11 shows a cross-section view of a heater according to the invention according to a sectional plane XII which is orthogonal to the main axis of the combustion chamber, in which the battery is in operative position and is depicted diagrammatically;

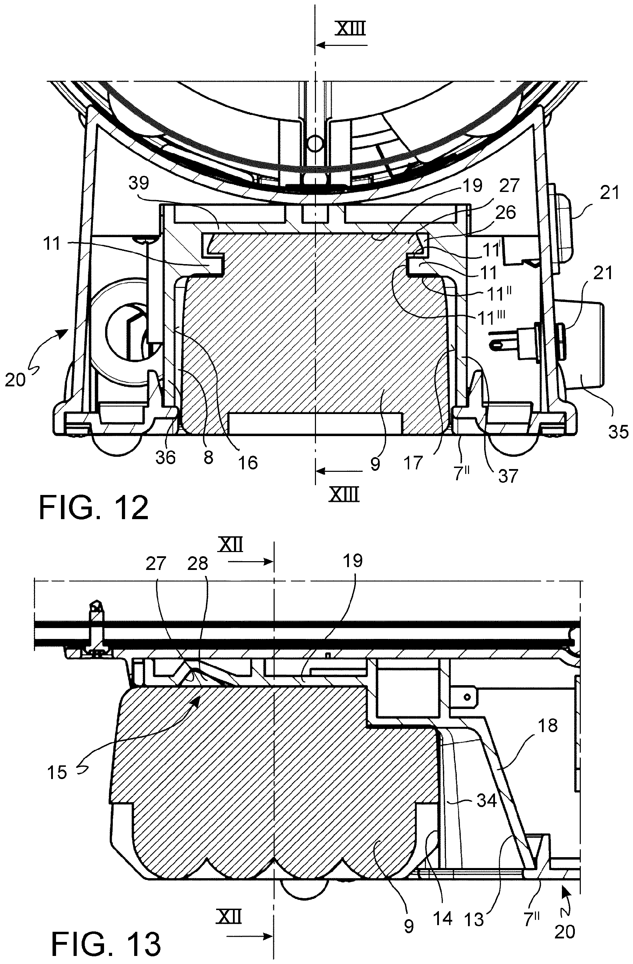

- figure 12 shows an enlarged detail of figure 11;
- figure 13 shows an enlarged detail of a longitudinal sectional view of the heater in figure 5, wherein the battery is in operative position and is depicted diagrammatically.

### Description of some preferred embodiments

With reference to the drawings, a portable fluid fuel air heater according to the invention is indicated as a whole with numeral 1.

The portable fluid fuel air heater 1 comprises a combustion chamber 2 adapted to accommodate a combustion 5 of a fluid fuel 6, a supply conduit 3 for supplying said fluid fuel 6 to the combustion chamber 2, at least one electrical device required for the operation of heater 1 mounted on board the heater.

For example, said at least one electrical device comprises an electric fan 4 adapted to introduce a forced combustion air flow 49 into the combustion chamber 2 to perform the combustion 5 during the operation of the heater.

In accordance with an embodiment, said at least one electrical device comprises at least one of the following devices:
- an electric starter 43 adapted to trigger the combustion in the combustion chamber 2, for example arranged in the combustion chamber 2;
- a thermostat 42 adapted to provide a temperature signal, for example arranged in the combustion chamber 2;
- an electronic control board 38 for controlling and/or distributing the electrical energy between battery 9 and the other components and/or electrical devices of the heater;
- an electrovalve 39 for opening the fuel flow, e.g. liquid gas, towards the supply conduit 3 when said electrovalve is electrically activated;
- interface devices 21 for interfacing with a user.

Such interface devices 21 may comprise e.g. buttons, knobs, selector switches, switches 44, warning lights, electronic displays, e.g. touch-screen, electrical connectors 35 for the removable connection of electric cables, inlets and/or outlets for a fluid fuel, temperature sensors.

The heater 1 is delimited by an heater outer surface 7 comprising a cavity-like portion 8 for receiving an electric battery 9 in a removable manner up to an operative position of the battery in which battery 9 is adapted to electrically power the electrical device 4, said cavity-like portion 8 being configured to keep battery 9 outside said outer surface 7 of the heater in said operative position of the battery.

In other words, the cavity-like portion 8 may be easily accessed from the outside of heater 1 during the use of heater 1.

In other words, the cavity-like portion 8 is configured to receive battery 9 so that such a battery 9 remains at least partially outside the heater during use.

In other words, the cavity-like portion 8 remains operatively facing the outside of heater 1 during use.

In other words, the cavity-like portion 8 is defined by cavity walls 34, 36, 37, 39 adapted to remain operatively interposed between the inside of the heater and said electric battery 9.

In other words, the cavity-like portion 8 is defined by cavity walls 34, 36, 37, 39 interposed between the inside of heater 1 and the outside of heater 1.

Thereby, the replacement of the battery is quite simple and quick and can be executed by untrained personnel. Indeed, it is sufficient to grasp the battery in operative position and to remove it with a simple manual movement and/or by pressing a release button, thus avoiding the need to access the inside of the heater. This provision does not require opening a panel for closing an inner compartment of the heater to access the battery. Moreover, it does not require manually disconnecting electrical connectors arranged inside the heater.

In accordance with an embodiment, the cavity-like portion 8 comprises connection means for allowing the battery to electrically power the electrical components of the heater when said battery is in the operative position.

In accordance with an embodiment, such connection means comprise electric contacts 22 arranged so that when the battery is in the operative position, they come into electrical contact with corresponding electric contacts 45 of battery 9.

Thereby, by simply manually moving the battery away from the heater, the electrical connection is automatically disconnected.

In accordance with an embodiment, the electric contacts 22 of the cavity-like portion comprise metal laminas.

In accordance with an alternative embodiment, the connection means comprise electromagnetic induction means (not shown in the figures), although they are less performing than the electric contacts in terms of energy consumption.

In accordance with an embodiment, heater 1 does not comprise, or does not have, means for closing said cavity-like portion when said battery is in the operative position. Thereby, access to the battery to be replaced is immediate.

The cavity-like portion 8 separates the inside of heater 1 from the outside of heater 1. Thereby, the inside of the heater is protected against the involuntary introduction of foreign bodies or accidental contact by a user with the inner components of the heater.

The cavity-like portion 8 is joined to the heater outer surface 7 along a cavity-like portion edge 10.

In other words, the cavity-like portion 8 faces the outside of heater 1 along a cavity-like portion edge 10.

In accordance with an embodiment, the cavity-like portion 8 is joined to the heater outer surface 7, e.g. in a fluid and/or dust tight manner.

Thereby, the battery may be replaced while avoiding a gap from being opened for the liquids towards the inside of the heater during the replacement of the battery, therefore capable of keeping a liquid seal also during replacement of the battery.

In other words, the heater outer surface 7, comprising said cavity-like portion 8, may provide a barrier to the dust and/or liquids during operation of the heater with the battery in the operative position, during the replacement of the battery and when the battery is removed.

Thereby, the inlet of liquids or dust inside the heater is continuously prevented at the cavity-like portion, both when the battery is in the operative position and when the battery is removed. This effect is particularly advantageous because it protects the inside of the heater from liquids and dust not only during the operation of the heater when the battery is inserted, but also and especially during the replacement of the battery. This allows a safe replacement of the battery, also in humid and dusty places or environments.

In accordance with an embodiment, the cavity-like portion 8 comprises guide surfaces 11', 11", 11"' adapted to allow battery 9 to slide in a guided manner between a battery inlet position and said operative position along a battery sliding direction B-B, said guide surfaces 11', 11", 11"' extending parallel to said battery sliding direction B-B. Thereby, the insertion and removal of battery 9 into/from the cavity-like portion 8 is accurate, in addition to being quick and simple.

In accordance with an embodiment, the battery sliding direction B-B is a rectilinear direction.

In accordance with an embodiment, the guide surfaces 11', 11", 11"' are adapted to slidably engage with sliding engagement counter-surfaces 23, 24, 25 of the battery.

In accordance with an embodiment, the guide surfaces 11', 11", 11"' are substantially flat.

In accordance with an embodiment, the guide surfaces 11', 11", 11"' comprise an upper surface 11', a lower surface 11" opposite to the upper surface 11', for example substantially parallel to the upper surface 11', a lateral surface 11"' which mutually joins the upper surface 11' with the lower surface 11", for example substantially orthogonal to said upper surface 11' and/or to said lower surface 11".

In accordance with an embodiment, the cavity-like portion 8 comprises at least one sliding track 11 which extends parallel to said battery sliding direction B-B, the sliding track 11 being adapted to allow battery 9 to slide in the battery sliding direction B-B.

In accordance with an embodiment, the sliding track is delimited by said guide surfaces 11', 11", 11"'.

In accordance with an embodiment, the cavity-like portion 8 comprises two sliding tracks 11 which are substantially parallel to each other and face each other in an approaching manner to allow battery 9 to slide in the battery sliding direction B-B.

In accordance with an embodiment, each of said tracks is defined by guide surfaces 11', 11", 11"'.

In accordance with an embodiment, the cavity-like portion 8 comprises a stop surface 14 arranged transversely to the battery sliding direction B-B, which is adapted to stop the sliding of said battery 9 at said operative position.

In accordance with an embodiment, the stop surface 14 is substantially orthogonal to the battery sliding direction B-B.

In accordance with an embodiment, the stop surface 14 is arranged at one inner end of said cavity-like portion 8, opposite to said cavity-like portion edge 10.

In accordance with an embodiment, the stop surface 14 is substantially flat.

In accordance with an embodiment, the cavity-like portion 8 comprises a longitudinal surface 19 which is substantially parallel to said battery sliding direction B-B, which connects said stop surface 14 with said edge 10 of the cavity-like portion.

In accordance with an embodiment, the longitudinal surface 19 is substantially flat.

In accordance with an embodiment, the longitudinal surface 19 is substantially orthogonal to said stop surface 14.

In accordance with an embodiment, a sliding channel 26 is formed between the longitudinal surface 19 and the upper surface 11' to slidably engage a portion of said battery 9, which extends along said battery sliding direction B-B.

In accordance with an embodiment, the longitudinal surface 19 is facing and is substantially parallel to the upper surface 11'.

In accordance with an embodiment, a sliding channel 26 is formed between the longitudinal surface 19 and said at least one sliding track 11 to slidably engage a portion of said battery 9.

In accordance with an embodiment, two respective sliding channels 26 are formed between the longitudinal surface 19 and said two sliding tracks to slidably engage two respective opposite portions of battery 27, said two sliding channels 26 being parallel to and facing each other.

In accordance with an embodiment, a first channel of said two sliding channels has a width measured in a direction which is orthogonal to the longitudinal surface 19, which is substantially equal to the width of a second channel of said two channels measured in direction which is orthogonal to the longitudinal surface 19.

In other words, in accordance with an embodiment, the distance between the longitudinal surface 19 and the upper surface 11' of one of said two sliding channels 26 measured in direction which is orthogonal to the longitudinal surface 19 is substantially equal to the distance between the longitudinal surface 19 and the upper surface 11' of the two sliding channels 26 measured in direction which is orthogonal to the longitudinal surface 19.

In other words, in accordance with an embodiment, the distance between the longitudinal surface 19 and one of the two tracks 11 is substantially equal to the distance between the longitudinal surface 19 and the other of the two tracks 11.

In accordance with an embodiment, the cavity-like portion 8 comprises a first lateral surface 16 and a second lateral surface 17 which face each other on opposite sides of said cavity-like portion 8, wherein such lateral surfaces 16 and 17 connect said stop surface 14 with said edge 10 of the cavity-like portion.

In accordance with an embodiment, the first lateral surface 16 and the second lateral surface 17 are substantially parallel to each other and parallel to the battery sliding direction B-B.

In accordance with an embodiment, the first lateral surface 16 and the second lateral surface 17 are substantially flat.

In accordance with an embodiment, the first lateral surface 16 and the second lateral surface 17 are substantially orthogonal to said stop surface 14.

In accordance with an embodiment, the longitudinal surface 19 is interposed between the first lateral surface 16 and the second lateral surface 17.

In accordance with an embodiment, the first lateral surface 16 and the second lateral surface 17 are substantially orthogonal to the longitudinal surface 19.

In accordance with an embodiment, the cavity-like portion 8 defines a box-like cavity structure 33 formed by cavity walls 34, 36, 37, 39.

In accordance with an embodiment, said box-like cavity structure 33 has at least one wall which is operatively open towards the outside of the heater to allow the introduction/removal of battery 9.

In accordance with an embodiment, said cavity walls 34, 36, 37, 39 comprise at least one of:
- a stop wall 34 defined by said stop surface 14;
- a longitudinal wall 39, or upper wall, defined by said longitudinal surface 19;
- a first lateral wall 36 defined by a first of said lateral surfaces 16;
- a second lateral wall 37 defined by a second of said lateral surfaces 17.

In accordance with an embodiment, said cavity walls 34, 36, 37, 39 are joined to one another in a fluid and/or dust tight manner.

In accordance with an embodiment, said cavity walls 34, 36, 37, 39 are made in one piece with one another, e.g. by molding of plastics.

In accordance with an embodiment, the outer surface 7 comprises a battery gripping recessed portion 13 adjacent to said cavity-like portion 8, and as an extension of said cavity-like portion 8, thus forming a space which can be accessed from the outside to allow an operator to insert his finger to grasp the battery when it is in the operative position in order to remove it.

In accordance with an embodiment, said battery gripping recessed portion 13 extends from said stop surface 14 moving away from said cavity-like portion 8.

In accordance with an embodiment, a cross-section of the battery gripping recessed portion 13 by means of a section plane which is orthogonal to an access direction in the recessed position for gripping the battery is an open curved line, for example substantially in the shape of a semi-circumference.

In accordance with an embodiment, the area of the cross-section of the battery gripping recessed portion 13 by means of a section plane which is orthogonal to the stop surface 14 is decreasing proceeding from the outside of the heater towards the inside of the heater along an access direction in the battery gripping recessed portion.

In other words, the battery gripping recessed portion 13 is tapered towards the inside of the heater.

In accordance with an embodiment, the battery gripping recessed portion 13 extends along a direction which is substantially orthogonal to the longitudinal surface 19.

In accordance with an embodiment, the battery gripping recessed portion 13 is defined by a battery gripping a recessed wall 18 which is rounding joined with said stop wall 34.

In accordance with an embodiment, the heater outer surface 7 comprises a first portion of outer surface 7' which is substantially transverse to said battery sliding direction B-B, in which said edge 10 of the cavity-like portion comprises a first edge portion 10' of the cavity-like portion arranged on said first portion of the outer surface 7'.

In accordance with an embodiment, the heater outer surface 7 comprises a second portion of the outer surface 7" adjacent to said first portion of the outer surface 7' and is substantially parallel to said battery sliding direction B-B.

In accordance with an embodiment, the edge 10 of the cavity-like portion comprises a second edge portion 10" of the cavity-like portion which extends on said second portion of the outer surface 7".

In accordance with an embodiment, the second portion of the outer surface 7" is substantially flat and the first outer surface 7' is curved and joined with the second outer surface 7".

In accordance with an embodiment, said battery gripping recessed portion 13 penetrates into the heater from said second outer surface 7".

In accordance with an embodiment, the cavity-like portion 8 comprises a snap engagement device 15 for retaining said battery 9 when it is in said operative position.

In accordance with an embodiment, the snap engagement means 15 comprise a recess 47 made in said cavity-like portion 8, for movably receiving a movable coupling element 28 of said battery 9 when said battery 9 is in the operative position.

In accordance with an embodiment, recess 47 comprises two adjacent inclined surfaces. Thereby, such surfaces facilitate the movement of the movable coupling element 28 of the battery between an engage extracted position and a disengage compressed position.

In accordance with an embodiment, recess 47 is a blind recess. Thereby, inlet of liquids or dust into the heater through said recess 47 is prevented.

In accordance with an embodiment, recess 47 belongs to said longitudinal surface 19, for example close to said edge 10 of the cavity-like portion.

If there are two sliding tracks 11, said recess is interposed between said two sliding tracks 11, and for example is equally spaced from said two sliding tracks 11.

In accordance with an embodiment, heater 1 comprises a control box 20, said control box 20 being fixed with respect to said combustion chamber 2 and defining an outer surface of the control box, said outer surface of the control box comprising said cavity-like portion 8.

In accordance with an embodiment, the control box 20 accommodates therein electrical and/or mechanical components for the operation of the heater, for example such components comprise at least one of:
- an electronic control board 38 for controlling and/or distributing the electrical energy between battery 9 and the other components and/or electrical devices of the heater;
- an electrovalve 39 for opening a fuel flow, e.g. liquid gas, towards the supply conduit 3 when said electrovalve is electrically activated;
- a manual safety valve 40 for opening or closing the fuel flow, e.g. liquid gas, towards the supply conduit 3 when said valve is manually activated;
- interface devices 21 for interfacing with a user 21.

It is noted that during the operation of the heater with battery 9 in the operative position of the battery, the battery is arranged outside the control box 20 while the aforesaid electrical and/or mechanical components are arranged inside the control box 20.

In accordance with an embodiment, the control box 20 comprises an inlet for fuel 41, e.g. liquid gas.

In accordance with an embodiment, the control box 20 forms a support base for said combustion chamber 2 and comprises said second outer surface 7".

In accordance with an embodiment, the second outer surface 7" is adapted to be supported on a floor or a supporting surface.

In accordance with an embodiment, the combustion chamber 2 is substantially tubular and extends along a main axis C-C of the combustion chamber.

The combustion chamber has a heated air outlet opening 30 at one end of said tubular combustion chamber 2.

In accordance with an embodiment, the battery sliding direction B-B is substantially parallel to said main axis C-C of the combustion chamber.

In accordance with an embodiment, the first outer surface portion 7' faces the same side as said heated air outlet opening 30.

In accordance with an embodiment, the combustion chamber has a combustion air inlet 31 opposite to said heated air outlet opening 30.

In accordance with an embodiment, the electric fan 4 is arranged upstream of the combustion chamber 2, for example facing said combustion air inlet 31.

In accordance with an embodiment, heater 1 comprises an automatic electric switch 35 adapted to disconnect the battery power supply when a power supply from an electrical distribution network is available, and to connect the battery power supply when a power supply from an electrical distribution network is not available.

For example, the switch 35 is socket electric connector having a mechanical switch, for example mounted on the control box 20, adapted to connect the power supply when a plug is inserted into the socket electric connector.

In accordance with an embodiment, the heater 1 comprises a removable battery 9 adapted to be received and retained in said cavity-like portion 8, said removable battery 9 being delimited by an outer battery surface 51, wherein at least one portion 42 of said outer battery surface remains visible when said battery 9 is in said operative position of the battery.

Thereby, since part of the battery is always exposed to the outside, it is easily accessible without the need to open any door. This allows a quick replacement of the battery. Moreover, it may also be replaced while wearing a work glove. Moreover, the replacement of the battery does not require the use of any tool.

Battery 9 may comprise any combination of the features described above.

For example, battery 9 may comprise a button 29 which when pressed by a user, causes the movable coupling element to move from an engage extracted position to a disengage compressed position.

Although a heater having a cylindrical combustion chamber has been described, the present invention may also be applied to a heater having a conical combustion chamber, or a combustion chamber having any other shape.

The present invention may be applied to any portable fluid fuel heater, e.g. a portable liquid gas or liquid fuel heater.

If the invention is applied to a liquid fuel heater, the heater may comprise a liquid fuel tank connected to the fuel supply conduit 3 and a fuel nebulization nozzle.

The present invention may be applied e.g. to a portable air heater of the infrared heat radiation type.

For example, such a heater has a cone-shaped combustion chamber having an outlet at the base of the cone and a metal grille at said outlet adapted to be heated by the combustion up to such a temperature as to emit heat by radiation. This type of heater has the advantage of generating a well-defined in space radiation beam and having front rectilinear extension.

This type of infrared heater may comprise a liquid fuel tank for feeding the combustion in the combustion chamber. Such a liquid fuel may be diesel fuel, kerosene, petrol or other liquid hydrocarbons. Furthermore, the present invention may also be applied to other types of portable air heaters.

Those skilled in the art may make several changes and adaptations to the above-described embodiments of the device, and may replace elements with others which are functionally equivalent in order to meet contingent needs, without departing from the scope of the following claims. Each of the features described as belonging to a possible embodiment can be achieved irrespective of the other embodiments described.

## Claims

1. Portable fluid fuel air heater (1) comprising:
- a combustion chamber (2) for accommodating a combustion (5) of a fluid fuel (6);
- a supply conduit (3) for supplying said fluid fuel (6) to the combustion chamber (2);
- at least one electrical device (4) required for the operation of the heater (1) mounted on board of the heater;
- an outer surface (7) of the heater comprising a cavity-like portion (8) of the outer surface (7) for receiving an electric battery (9) in a removable manner up to an operative position of the battery wherein the battery (9) is adapted to electrically power the electrical device (4),
said cavity-like portion (8) of the outer surface separating the inside of the heater from the outside of the heater at said cavity-like portion (8) of the outer surface and being configured to keep the battery (9) outside the heater in said operative position of the battery;
**characterized by**
- a control box (20) integral with said combustion chamber (2) and defining an outer surface of the control box belonging to said outer surface (7) of the heater, said outer surface of the control box comprising said cavity-like portion (8) of the outer surface (7).

2. Heater according to claim 1 wherein said cavity-like portion (8) of the outer surface comprises guide surfaces (11', 11", 11"') adapted to slidably guide the battery (9) between a battery inlet position and said operative position along a battery sliding direction (B-B), said guide surfaces (11', 11", 11"') extending parallel with said battery sliding direction (B-B).

3. Heater according to claim 1 or 2, wherein the cavity-like portion (8) of the outer surface comprises a stop surface (14) arranged transversely to a battery sliding direction (B-B), adapted to stop the sliding of said battery (9) at said operative position.

4. Heater according to at least one preceding claims, wherein said outer surface (7) of the heater comprises a recessed portion (13) for gripping the battery (9) adjacent to said cavity-like portion (8) of the outer surface as an extension of said cavity-like portion (8) of the outer surface, forming a space that can be accessed from the outside to allow an operator to insert a finger to grasp the battery (9) when said battery (9) is in the operative position in order to remove it.

5. Heater according to claim 4 wherein said recessed portion (13) for gripping the battery (9) is developed starting from said stop surface (14) moving away from said cavity-like portion (8) of the outer surface.

6. Heater according to at least one claim 2 to 5, wherein the cavity-like portion (8) of the outer surface faces towards the outside of the heater along an edge (10) of the cavity-like portion, wherein said outer surface of heater (7) comprises a first portion of the outer surface (7') substantially transverse to said battery sliding direction (B-B), wherein said edge (10) of the cavity-like portion comprises a first edge portion (10') of the cavity-like portion arranged on said first outer surface (7').

7. Heater according to claim 6 wherein said heater outer surface (7) comprises a second portion of the outer surface (7") adjacent to said first portion of the outer surface (7') and substantially parallel with said battery sliding direction (B-B), said edge (10) of the cavity-like portion comprising a second edge portion (10") of the cavity-like portion which is extended on said second outer portion surface (7").

8. Heater according to at least one preceding claim, wherein said cavity-like portion (8) of the outer surface comprises a snap engagement device (15) to retain said battery (9) when it is in said operative position.

9. Heater, according to claim 7, wherein said control box (20) forms a support base for said combustion chamber (2) and comprises said second portion of outer surface (7"), wherein said second portion of outer (7") is adapted to be supported on a floor or a supporting surface.

10. Heater according to at least one of claims 2 to 9 wherein the combustion chamber (2) is substantially tubular and is developed along a main axis of the combustion chamber (C-C) and has an heated air outlet opening (30) at an end of said tubular combustion chamber (2), wherein said battery sliding direction (B-B) is substantially parallel with said main axis of the combustion chamber (C-C), and/or wherein said first portion of the outer surface (7') faces the same side as said heated air outlet opening (30).

11. Heater according to at least one preceding claim, comprising an automatic electric switch (35) adapted to disconnect the battery power supply when a power supply from an electrical distribution network is available, and connect the battery power supply when a power supply from an electrical distribution network is not available.

12. Heater according to at least one preceding claim, comprising a removable battery (9) adapted to be received and retained in said cavity-like portion (8) of the outer surface, said removable battery (9) being delimited by an outer battery surface (51), wherein at least one portion of said battery outer surface (51) remains visible when said battery (9) is in said operative position of the battery.

## Patentansprüche

1. Tragbare Brennstofffluid-Lufterhitzereinheit (1), umfassend:
- eine Brennkammer (2) zum Aufnehmen einer Verbrennung (5) eines Brennstofffluids (6);
- eine Lieferleitung (3) zum Liefern des Brennstofffluids (6) an die Brennkammer (2);
- wenigstens eine elektrische Vorrichtung (4), welche für den Betrieb der Erhitzereinheit (1) benötigt wird, welche an Bord der Erhitzereinheit angebracht ist;
- eine äußere Fläche (7) der Erhitzereinheit, welche einen Hohlraum-artigen Abschnitt (8) der äußeren Fläche (7) umfasst, um eine elektrische Batterie (9) in einer entfernbaren Weise bis zu einer Betriebsposition der Batterie aufzunehmen, wobei die Batterie (9) dazu eingerichtet ist, die elektrische Vorrichtung (4) elektrisch zu betreiben,
wobei der Hohlraum-artige Abschnitt (8) der äußeren Fläche die Innenseite der Erhitzereinheit von der Außenseite der Erhitzereinheit an dem Hohlraum-artigen Abschnitt (8) der äußeren Fläche trennt und dazu eingerichtet ist, die Batterie (9) außerhalb der Erhitzereinheit in der Betriebsposition der Batterie zu halten;
**gekennzeichnet durch**
- eine Regel-/Steuerbox (20), welche mit der Brennkammer (2) integral ist und eine äußere Fläche der Regel-/Steuerbox definiert, welche zu der äußeren Fläche (7) der Erhitzereinheit gehört, wobei die äußere Fläche der Regel-/Steuerbox den Hohlraum-artigen Abschnitt (8) der äußeren Fläche (7) umfasst.

2. Erhitzereinheit nach Anspruch 1, wobei der Hohlraum-artige Abschnitt (8) der äußeren Fläche Führungsflächen (11', 11", 11'") umfasst, welche dazu eingerichtet sind, die Batterie (9) zwischen einer Batterie-Einlassposition und der Betriebsposition entlang einer Batterie-Gleitrichtung (B-B) gleitbar zu führen, wobei sich die Führungsflächen (11', 11", 11"') parallel zu der Batterie-Gleitrichtung (B-B) erstrecken.

3. Erhitzereinheit nach Anspruch 1 oder 2, wobei der Hohlraum-artige Abschnitt (8) der äußeren Fläche eine Anschlagsfläche (14) umfasst, welche transversal zu einer Batterie-Gleitrichtung (B-B) angeordnet ist, welche dazu eingerichtet ist, das Gleiten der Batterie (9) an der Betriebsposition zu stoppen.

4. Erhitzereinheit nach wenigstens einem der vorhergehenden Ansprüche, wobei die äußere Fläche (7) der Erhitzereinheit einen ausgenommenen Abschnitt (13) umfasst, um die Batterie (9) dem Hohlraum-artigen Abschnitt (8) der äußeren Fläche benachbart als eine Erweiterung des Hohlraum-artigen Abschnitts (8) der äußeren Fläche zu greifen, wobei ein Raum gebildet wird, welcher von der Außenseite zugänglich ist, um einem Bediener zu erlauben, einen Finger einzuführen, um die Batterie (9) zu greifen, wenn die Batterie (9) in der Betriebsposition ist, um sie zu entfernen.

5. Erhitzereinheit nach Anspruch 4, wobei sich der ausgenommene Abschnitt (13) zum Greifen der Batterie (9) von der Anschlagsfläche (14) beginnend von dem Hohlraum-artigen Abschnitt (8) der äußeren Fläche weg bewegend entwickelt.

6. Erhitzereinheit nach wenigstens einem der Ansprüche 2 bis 5, wobei der Hohlraum-artige Abschnitt (8) der äußeren Fläche zu der Außenseite der Erhitzereinheit entlang eines Rands (10) des Hohlraum-artigen Abschnitts weist, wobei die äußere Fläche der Erhitzereinheit (7) einen ersten Abschnitt der äußeren Fläche (7') umfasst, welcher im Wesentlichen transversal zu der Batterie-Gleitrichtung (B-B) ist, wobei der Rand (10) des Hohlraum-artigen Abschnitts einen ersten Randabschnitt (10') des Hohlraum-artigen Abschnitts umfasst, welcher an der ersten äußeren Fläche (7') angeordnet ist.

7. Erhitzereinheit nach Anspruch 6, wobei die äußere Fläche (7) der Erhitzereinheit einen zweiten Abschnitt der äußeren Fläche (7") umfasst, welcher dem ersten Abschnitt der äußeren Fläche (7') benachbart und zu der Batterie-Gleitrichtung (B-B) im Wesentlichen parallel ist, wobei der Rand (10) des Hohlraum-artigen Abschnitts einen zweiten Randabschnitt (10") des Hohlraum-artigen Abschnitts umfasst, welcher sich an der zweiten äußeren Abschnittsfläche (7") erstreckt.

8. Erhitzereinheit nach wenigstens einem vorhergehenden Anspruch, wobei der Hohlraum-artige Abschnitt (8) der äußeren Fläche eine Schnappeingriff-Vorrichtung (15) umfasst, um die Batterie (9) zu halten, wenn sie in der Betriebsposition ist.

9. Erhitzereinheit nach Anspruch 7, wobei die Regel-/Steuerbox (20) eine Tragebasis für die Brennkammer (2) bildet und den zweiten Abschnitt der äußeren Fläche (7") umfasst, wobei der zweite Abschnitt der äußeren (7") dazu eingerichtet ist, an einem Boden oder einer Halterungsfläche getragen zu werden.

10. Erhitzereinheit nach wenigstens einem der Ansprüche 2 bis 9, wobei die Brennkammer (2) im Wesentlichen rohrförmig ist und sich entlang einer Hauptachse der Brennkammer (C-C) erstreckt und eine Warmluft-Auslassöffnung (30) an einem Ende der rohrförmigen Brennkammer (2) aufweist, wobei die Batterie-Gleitrichtung (B-B) zu der Hauptachse der Brennkammer (C-C) im Wesentlichen parallel ist, und/oder wobei der erste Abschnitt der äußeren Fläche (7') zu der gleichen Seite weist wie die Warmluft-Auslassöffnung (30).

11. Erhitzereinheit nach wenigstens einem vorhergehenden Anspruch, umfassend einen automatischen elektrischen Schalter (35), welcher dazu eingerichtet ist, die Batterie-Stromversorgung zu trennen, wenn eine Stromversorgung von einem elektrischen Verteilernetzwerk verfügbar ist, und die Batterie-Stromversorgung zu verbinden, wenn eine Stromversorgung von einem elektrischen Verteilernetzwerk nicht verfügbar ist.

12. Erhitzereinheit nach wenigstens einem vorhergehenden Anspruch, umfassend eine entfernbare Batterie (9), welche dazu eingerichtet ist, in dem Hohlraum-artigen Abschnitt (8) der äußeren Fläche aufgenommen und gehalten zu werden, wobei die entfernbare Batterie (9) durch eine äußere Batteriefläche (51) begrenzt ist, wobei wenigstens ein Abschnitt der äußeren Batteriefläche (51) sichtbar verbleibt, wenn die Batterie (9) in der Betriebsposition der Batterie ist.

## Revendications

1. Appareil de chauffage d'air à combustible fluide portable (1) comprenant :
- une chambre de combustion (2) pour recevoir une combustion (5) d'un combustible fluide (6) ;
- un conduit d'alimentation (3) pour fournir ledit combustible fluide (6) à la chambre de combustion (2) ;
- au moins un dispositif électrique (4) nécessaire au fonctionnement de l'appareil de chauffage (1) monté à bord de l'appareil de chauffage ;
- une surface extérieure (7) de l'appareil de chauffage comprenant une portion de type cavité (8) de la surface extérieure (7) pour recevoir une batterie électrique (9) de manière amovible jusqu'à une position de fonctionnement de la batterie dans lequel la batterie (9) est adaptée pour alimenter électriquement le dispositif électrique (4),
ladite portion de type cavité (8) de la surface extérieure séparant l'intérieur de l'appareil de chauffage de l'extérieur de l'appareil de chauffage au niveau de ladite portion de type cavité (8) de la surface extérieure et étant configurée pour maintenir la batterie (9) à l'extérieur de l'appareil de chauffage dans ladite position de fonctionnement de la batterie ;
**caractérisé par**
- un boîtier de commande (20) faisant partie intégrante de ladite chambre de combustion (2) et définissant une surface extérieure du boîtier de commande appartenant à ladite surface extérieure (7) de l'appareil de chauffage, ladite surface extérieure du boîtier de commande comprenant ladite portion de type cavité (8) de la surface extérieure (7).

2. Appareil de chauffage selon la revendication 1 dans lequel ladite portion de type cavité (8) de la surface extérieure comprend des surfaces de guidage (11', 11", 11'") adaptées pour guider de manière coulissante la batterie (9) entre une position d'entrée de batterie et ladite position de fonctionnement le long d'une direction de coulissement de batterie (B-B), lesdites surfaces de guidage (11', 11", 11'") s'étendant parallèlement à ladite direction de coulissement de batterie (B-B).

3. Appareil de chauffage selon la revendication 1 ou 2, dans lequel la portion de type cavité (8) de la surface extérieure comprend une surface d'arrêt (14) agencée transversalement à une direction de coulissement de batterie (B-B), adaptée pour arrêter le coulissement de ladite batterie (9) à ladite position de fonctionnement.

4. Appareil de chauffage selon au moins une des revendications précédentes, dans lequel ladite surface extérieure (7) de l'appareil de chauffage comprend une portion évidée (13) pour la préhension de la batterie (9) adjacente à ladite portion de type cavité (8) de la surface extérieure en tant qu'extension de ladite portion de type cavité (8) de la surface extérieure, formant un espace qui est accessible depuis l'extérieur pour permettre à un opérateur d'insérer un doigt pour saisir la batterie (9) lorsque ladite batterie (9) est dans la position de fonctionnement afin de la retirer.

5. Appareil de chauffage selon la revendication 4 dans lequel ladite portion évidée (13) pour la préhension de la batterie (9) est développée à partir de ladite surface d'arrêt (14) en s'éloignant de ladite portion de type cavité (8) de la surface extérieure.

6. Appareil de chauffage selon au moins une revendication 2 à 5, dans lequel la portion de type cavité (8) de la surface extérieure est tournée vers l'extérieur de l'appareil de chauffage le long d'un bord (10) de la portion de type cavité, dans lequel ladite surface extérieure de l'appareil de chauffage (7) comprend une première portion de la surface extérieure (7') substantiellement transversale à ladite direction de coulissement de batterie (B-B), dans lequel ledit bord (10) de la portion de type cavité comprend une première portion de bord (10') de la portion de type cavité agencée sur ladite première surface extérieure (7').

7. Appareil de chauffage selon la revendication 6 dans lequel ladite surface extérieure de l'appareil de chauffage (7) comprend une deuxième portion de la surface extérieure (7") adjacente à ladite première portion de la surface extérieure (7') et substantiellement parallèle à ladite direction de coulissement de batterie (B-B), ledit bord (10) de la portion de type cavité comprenant une deuxième portion de bord (10") de la portion de type cavité qui est étendue sur ladite deuxième surface de portion extérieure (7").

8. Appareil de chauffage selon au moins une revendication précédente, dans lequel ladite portion de type cavité (8) de la surface extérieure comprend un dispositif de mise en prise par encliquetage (15) pour retenir ladite batterie (9) lorsqu'elle est dans ladite position de fonctionnement.

9. Appareil de chauffage, selon la revendication 7, dans lequel ledit boîtier de commande (20) forme une base de support pour ladite chambre de combustion (2) et comprend ladite deuxième portion de surface extérieure (7"), dans lequel ladite deuxième portion d'extérieur (7") est adaptée pour être supportée sur un sol ou une surface de support.

10. Appareil de chauffage selon au moins une des revendications 2 à 9 dans lequel la chambre de combustion (2) est substantiellement tubulaire et est développée le long d'un axe principal de la chambre de combustion (C-C) et a une ouverture de sortie d'air chauffé (30) à une extrémité de ladite chambre de combustion tubulaire (2), dans lequel ladite direction de coulissement de batterie (B-B) est substantiellement parallèle audit axe principal de la chambre de combustion (C-C), et/ou dans lequel ladite première portion de la surface extérieure (7') fait face au même côté que ladite ouverture de sortie d'air chauffé (30).

11. Appareil de chauffage selon au moins une revendication précédente, comprenant un interrupteur électrique automatique (35) adapté pour déconnecter l'alimentation électrique de batterie lorsqu'une alimentation électrique d'un réseau de distribution électrique est disponible, et connecter l'alimentation électrique de batterie lorsqu'une alimentation électrique d'un réseau de distribution électrique n'est pas disponible.

12. Appareil de chauffage selon au moins une revendication précédente, comprenant une batterie amovible (9) adaptée pour être reçue et retenue dans ladite portion de type cavité (8) de la surface extérieure, ladite batterie amovible (9) étant délimitée par une surface de batterie extérieure (51), dans lequel au moins une portion de ladite surface extérieure de batterie (51) reste visible lorsque ladite batterie (9) est dans ladite position de fonctionnement de la batterie.
